# EUROPEAN PATENT SPECIFICATION

(11) **EP 3 456 476 B1**
(45) Date of publication and mention of the grant of the patent: **25.08.2021**
(21) Application number: 18191094.4
(22) Date of filing: 28.08.2018
(51) Int. Cl.: B25B 27/00, B23P 19/08, F16J 15/3268

(54) **METHOD OF PUTTING CIRCULAR TOROIDAL SPRINGS IN OUTER GROOVES OF WORKPIECES AND A DEVICE FOR PERFORMING IT**
VERFAHREN ZUM EINBRINGEN VON KREISRINGFEDERN IN AUSSENNUTEN VON WERKSTÜCKEN UND VORRICHTUNG ZUR DURCHFÜHRUNG DES VERFAHRENS
PROCÉDÉ DE MISE EN PLACE DE RESSORTS TOROÏDAUX CIRCULAIRES DANS DES RAINURES EXTÉRIEURES DE PIÈCES À USINER ET SON DISPOSITIF DE MISE EN OEUVRE

(30) Priority: 29.08.2017 CZ 20170496
(43) Date of publication of application: 20.03.2019
(73) Proprietor: VÚTS, a.s., Liberec XI - Ruzodol I 460 01 Liberec (CZ)
(72) Inventor: Fabera, Jaroslav, 460 14 Liberec, Liberec XIV-Ruprechtice (CZ); Pryl, Stanislav, 464 01 Visnova (CZ); Bomba, Tomas, 460 05 Liberec, Liberec V-Kristianov (CZ)
(74) Representative: Musil, Dobroslav

(56) References cited:
- WO-A1-2017/057181
- CN-U- 203 831 341
- US-A1- 2004 194 277
- US-A1- 2015 224 613

## Description

### Technical field

The invention relates to a method of putting circular toroidal springs into outer grooves of workpieces, particularly the outer grooves of shaft seals.

The invention also relates to a device which automatically puts circular toroidal springs into the outer grooves of workpieces using this method.

### Background art

The insertion of circular springs, the so-called O-rings, for example in shaft seals, is currently carried out mostly manually. A known device for automatic insertion of circular springs includes a pneumatically operated gripping device resembling thin fingers. A circular spring is put on these thin fingers when they are pulled together, then by spreading the fingers apart the diameter of the circular spring is increased to the desired size and the circular spring is inserted into a workpiece.

The disadvantage of this device is that when putting on the toroidal ring springs, the fingers spread out are in contact with the spring only at several points where the finger pressure on the spring causes damage to the windings of the thread and thus the spring degradation. The minimum and maximum diameter of the circular spring is limited by the minimum and maximum values of pulling the fingers of the device together or spreading them out. A similar device can be seen in US2004194277.

The aim of the invention is to provide a method of putting circular toroidal springs into the outer grooves of a shaft seal which removes the disadvantages described above.

In addition, the aim of the invention is to provide a device for the automatic mounting of circular toroidal springs into the outer grooves of a shaft seal which overcomes the drawbacks described above.

### Principle of the invention

The aim of the invention is achieved by a method of putting circular toroidal springs into the outer grooves of workpieces, especially the outer grooves of shaft seals according to the invention, whose principle consists in that the circular spring is placed in a flexible bearing, into which a transfer mandrel is inserted, and consequently, the spring is transferred onto its circumference, the transfer mandrel with the spring is ejected from the flexible bearing and moves above a shifting bearing on which it abuts, whereupon with the aid of a transfer sliding sleeve, the spring is moved from the circumference of the transfer mandrel onto the circumference of the shifting bearing on which it remains even after the return of the transfer mandrel to its parking position, whereupon an insert mandrel moves above the shifting bearing and abuts on it, whereupon, with the aid of the shifting sliding sleeve, the spring moves onto the circumference of the insert mandrel, which moves along with the spring above the insert bearing in which the workpiece is placed and the insert mandrel abuts on the insert bearing and subsequently the spring is transferred with the aid of the insert sleeve from the cirmcumference of the insert mandrel into the outer groove of the workpiece and the insert mandrel returns to its parking position.

In addition, the aim of the invention is achieved by a device for the automatic mounting of circular toroidal springs, whose principle consists in that it comprises a lower set of elements and an upper set of elements mutually displaceable in the horizontal direction and in the vertical direction to element's mutual contact, where the lower set of elements comprises a flexible bearing for receiving a circular spring, whereby the transfer mandrel of the upper set can be moved above the flexible bearing, the transfer mandrel being coupled to the means for inserting it into the flexible bearing and for ejecting it from the flexible bearing along with the spring placed on its circumference, for transferring the spring above the shifting bearing of the lower set and abutting on the shifting bearing, whereby around the circumference of the transfer mandrel is reversibly displaceably arranged a transfer sliding sleeve coupled to the means for returning it onto circumference of the shifting bearing and back, in order to return the spring onto the circumference of the shifting bearing, above which the transfer mandrel is displaceably coupled to the means for causing its reciprocating movement against the shifting bearing, on which is displaceably reversibly arranged a shifting sliding sleeve coupled to the means for returning it onto the circumference of the insert mandrel and back with the purpose of transferring the spring onto the circumference of the insert mandrel, which is along with the spring displaceable above the insert bearing to a position in which it abuts the workpiece placed in the insert bearing, whereby on the circumference of the insert mandrel is arranged an insert sliding sleeve coupled to means for returning it above the outer groove of the workpiece and back in order to transfer the spring into the groove of the workpiece.The upper set of elements includes a transfer mandrel and an insert mandrel, and the lower set of elements includes a flexible bearing, a shifting bearing and an insert bearing. The individual elements of the upper set are displaceably mounted and coupled to means for ejecting them in the direction of the mounting or inserting them against the direction of the mounting of the lower set of elements. Furthermore, the elements of the sets are provided with reversibly displaceable sliding sleeves, which, after an element from the upper set abuts on an element from the lower set, transfer the spring from one element to another.

In a preferred embodiment, the flexible arms of the flexible bearing are on their inner side provided with protrusions which are oriented towards the axis of the flexible bearing. Between these protrusions there is an opening to the inner part of the flexible bearing whose diameter is smaller than the internal diameter of the placed spring and smaller than the diameter of the transfer mandrel.

For more accurate centering of the transfer mandrel to the shifting bearing, the front portion of the transfer mandrel is tapered into the shape of a truncated cone, and in the front portion of the shifting bearing a recess is formed, whose shape is negative towards the front portion of the transfer mandrel, the diameter of the transfer mandrel being the same as the diameter of the shifting bearing.

The shifting bearing includes an opening whose bottom constitues a bearing surface for an abutting protrusion of the insert mandrel, and so upon its abutment the front portion of the shifting bearing body is not in close contact with the front portion of the insert mandrel body, thereby preventing undesired damage to these front surfaces by mutual impact.

In order to prevent the spring placed on the protrusions of the flexible bearing falling through to the inner space of the flexible bearing, a lid coupled to a pressure spring is reversibly displaceably mounted in the inner part of the flexible bearing. The lid may be also provided with a protrusion on its front side, whereby the protrusion is flush with the plane of the front portion of the protrusions or extends above it when the lid has been pushed towards the inner side of the protrusions of the flexible arms.

### Description of drawings

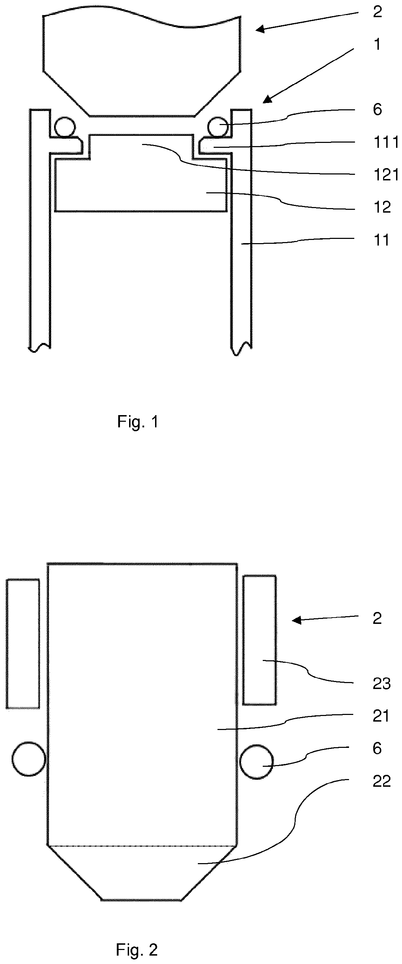

The invention is schematically represented in the drawings wherein
Fig. 1 shows a flexible bearing provided with a spring and the front portion of a transfer mandrel,
Fig. 2 a transfer mandrel provided with a spring,

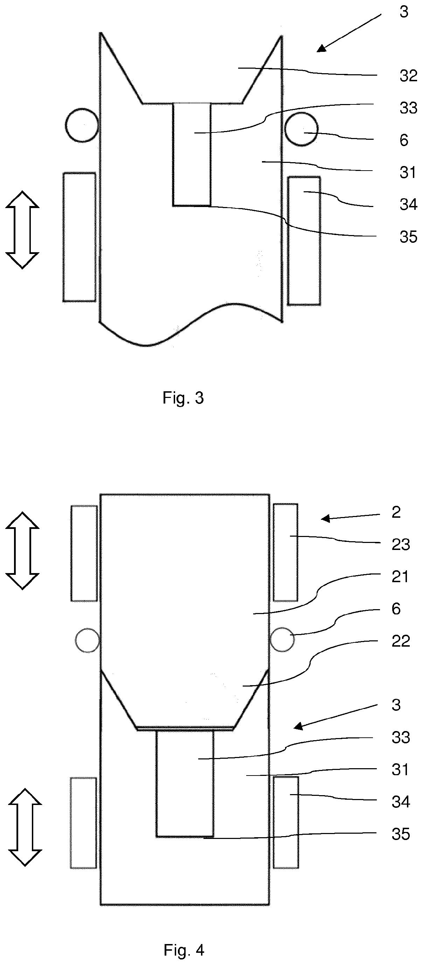

Fig. 3 a shifting bearing provided with a spring,
Fig. 4 a transfer mandrel placed in the shifting bearing,

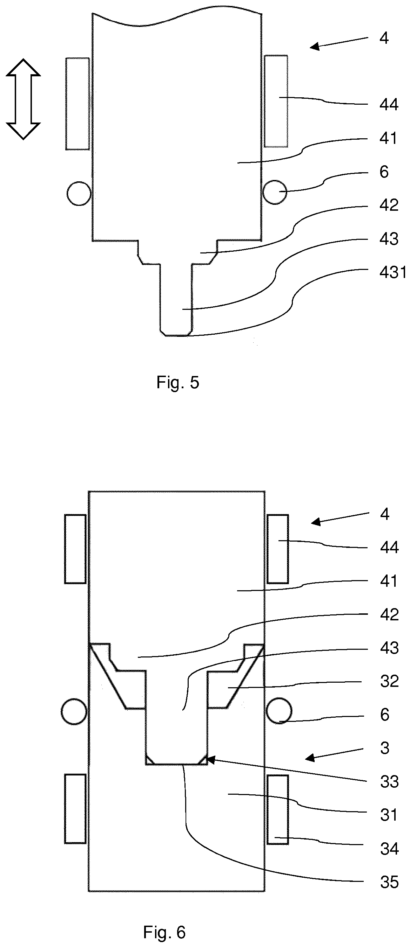

Fig. 5 an insert mandrel provided with a spring,
Fig. 6 an insert mandrel placed in the shifting bearing,

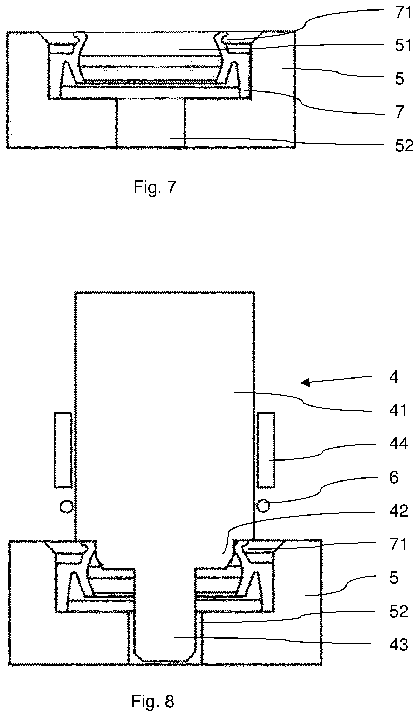

Fig. 7 an insert bearing with a workpiece placed in it and
Fig. 8 an insert mandrel placed in an insert bearing with a workpiece

### Examples of embodiment

The device for the automatic mounting of circular springs consists of two sets of elements, which are arranged with their front portions facing each other, whereby at least one set of elements can move along the vertical axis and/or at least one horizontal axis. The first set of elements comprises a transfer mandrel **2** and an insert mandrel **4,** the second set of elements comprises a flexible bearing **1,** a shifting bearing **3** and an insert bearing **5.**

The annular flexible bearing **1** comprises four flexible arms **11** which are part of a cylindrical surface in the illustrated embodiment and are connected to each other at one end thereof. The number of the flexible arms **11** is not limiting and is determined particularly by the size of the spring to be transferred. At the other free ends, the flexible arms **11** are on their inner side provided with protrusions **111,** which point towards the axis of the flexible bearing **1** and together with the inner side of the flexible arms **11** form a space for accommodating a circular spring **6.** In the illustrated embodiment, the protrusions are part of the inner ring inside the flexible arms and form an opening whose diameter is smaller than the inner diameter of the spring **6** to be transferred. The outer sides of the flexible arms **11** may be provided with grooves to increase the flexibility of the flexible arms or are provided with grooves to receive auxiliary external sliding flexible elements, such as a spring or rubber O-ring. In the interior of the flexible bearing **1,** a cylindrically shaped lid **12** is mounted reversibly displaceably on an unillustrated pressure spring and is provided with a central protrusion **121** on its front portion, whereby when the lid **12** is pushed from the inner side towards the protrusions **111** of the flexible arms **11,** the central protrusion **121** extends above the outer side of these protrusions **111.**

The transfer mandrel **2** comprises a cylindrical body **21** with an adjacent front portion **22** in the shape of a truncated cone. In this exemplary embodiment, the body **21** and the front portion **22** of the transfer mandrel **2** are made from a single piece of material; in another embodiment, they may be removable and replaceable. An insert sliding sleeve **23** of annular shape is arranged reversibly displaceably in the direction of its axis around the body **21** of the transfer mandrel **2.** The annular insert sleeve **23** is coupled to a known unillustrated device to cause its reciprocating movement. The front surface of the front portion **22** of the transfer mandrel **2** has a diameter smaller than the diameter of the opening between the protrusions **111** of the flexible arms **11.**

The shifting bearing **3** comprises a cylindrical body **31** having the same diameter as the transfer mandrel **2.** In the front portion of the shifting bearing **3** a recess **32** is formed whose shape is negative to the front portion **22** of the transfer mandrel **2.** Upon the abutment of the rising surfaces of the front portion **22** of the transfer mandrel **2** on the rising surfaces of the recess **32** of the shifting bearing **3** the sheaths of the body **21, 31** of the transfer mandrel **2** and of the shifting bearing **3** are in close contact. Furthermore, the recess **32** is in the axis of the shifting bearing **3** provided with an opening **33** of a cylindrical shape, whose bottom constitutes a bearing surface **35** for the abutting protrusion **43** of the insert mandrel **4,** which will be described in greater detail hereinafter. The annular shifting sliding sleeve **34** is reversibly displaceably arranged from the outer side of the body **31** of the shifting bearing **2** in the direction of its axis, the annular shifting sliding sleeve **34** being coupled to a known unillustrated device to cause its reciprocating movement.

The insert bearing **4** comprises a cylindrical body **41** having the same diameter as the shifting bearing **3.** On the front portion of the insert mandrel **4** is formed a guide protrusion **42** of a cylindrical shape, which contributes to the correct placement, i.e. centering, of the insert mandrel **4** into the workpiece **7** placed in the insert bearing **5.** On the guide protrusion **42,** an abutting protrusion **43** is formed which contributes to the centering of the insert mandrel **4** with respect to the shifting bearing **3** and its front surface **431** is designed to abut on the abutting bearing **35** in the shifting bearing **3,** thereby preventing undesired damage to the front surfaces of the insert mandrel **4** facing each other and surfaces of the shifting bearing **3** by the impact during the spring **6** transfer. The edges of the guide and abutting protrusions **42, 43** are bevelled, which simplifies the initial centering of the insert mandrel **4** and of the shifting bearing **3** and, moreover, reduces the risk of their damage, e.g. splintering of edges, etc. An annular insert sliding sleeve **44** is mounted reversibly displaceably around the cylindrical body **41** of the insert mandrel **4** in the direction of its axis, the insert sliding sleeve **44** being coupled to a known unillustrated device to cause its reciprocating motion.

The insert bearing **5** comprises a recess **51** on its front side, into which a workpiece **7** is inserted, e.g. a shaft seal. In the central part of the recess **51** an opening **52** is provided, which forms a space for the abutting protusion **43** of the insert mandrel **4.**

The above-described device for the automatic mounting of circular springs works in such a manner that the circular spring **6** is transferred with the aid of mandrels and bearings from the flexible bearing **1** to the groove **71** of a shaft seal, which in the illustrated embodiment constitutes a workpiece **7.**

First, a circular spring **6,** the position of which is partially centered by the central protrusion **121** of the slidably mounted lid **12** and the inner wall of the flexible arms **11** of the flexible bearing **1**, is manually inserted by the machine operator or by a separator from a vibrating feeder.

The transfer mandrel **2** moves along the linear track above the flexible bearing **1** with the circular spring **6** placed thereon and after that it is moved towards the flexible bearing **1.** When the transfer mandrel **2** is inserted into the flexible bearing **1,** the slidably mounted lid **12** is pushed into the inner part of the flexible bearing **1** and, at the same time, the free ends of the flexible arms **11** are pushed apart upon the contact of the inner protrusions **111** with the rising flat front portion **22** of the transfer mandrel. The spring **6** is pushed by the front side of the inner protrusions **111** along the rising surface of the front portion **22** of the transfer mandrel **2** and extends until it is moved onto the body **21** of the transfer mandrel **2.** Afterwards, the transfer mandrel **2** is pushed back to the linear track along with the spring **6** placed thereon.

The transfer mandrel **2** moves along the linear track above the shifting bearing **3** and subsequently abuts on and simultaneously the front portion **22** of the transfer mandrel **2** is inserted into the recess **33** of the shifting bearing **3.** The transfer sliding sleeve **23** mounted around the body **21** of the transfer mandrel **2** moves towards the shifting bearing **3,** thereby simultaneously moving the spring **6** placed on the body of the transfer mandrel **2** onto the body of the shifting bearing **3.** Subsequently, the transfer mandrel **2** is pushed back to the linear track.

By means of the linear track, the insert mandrel **4** moves above the shifting bearing **3** and subsequently abuts on it, whereby the abutting protrusion **43** of the insert mandrel **4** abuts on the bearing surface **35,** which constitutes the bottom of the opening **33** of the shifting bearing **3.** The shifting sliding sleeve **34** mounted around the body **31** of the shifting bearing **3** moves towards the insert mandrel **4,** pushing the spring **6** in front of it, thereby moving the spring **6** onto the body **41** of the insert mandrel **4** and subsequently the insert mandrel **4** moves back to the linear track.

The insert mandrel **4** moves along the linear track above the insert bearing **5,** in whose recess **51** the workpiece **7** is placed and then the insert mandrel **4** abuts on the workpiece **7,** whereby the guide protrusion **43** is inserted into the workpiece **7.** The insert sliding sleeve **44** begins to move towards the insert bearing **5,** pushing the spring **6** in front of it. After being pushed from the body of the insert mandrel **4,** the spring engages into the groove **71** of the workpiece **7** and reduces its diameter, thereby placing the spring **6** in the desired position. Subsequently, the insert mandrel **4** is pushed back to the linear track and thereby allows the workpiece **7** to be removed.

### List of references

- 1: flexible bearing
- 11: flexible arm
- 111: protrusion
- 12: lid
- 121: central protrusion
- 2: transfer mandrel
- 21: body of the transfer mandrel
- 22: front portion of the transfer mandrel
- 23: transfer sliding sleeve
- 3: shifting bearing
- 31: body of the shifting bearing
- 32: recess
- 33: opening
- 34: shifting sliding sleeve
- 35: bearing surface
- 4: insert mandrel
- 41: body of the insert mandrel
- 42: guide protrusion
- 43: abutting protrusion
- 431: front surface of the abutting protrusion
- 44: insert sliding sleeve
- 5: insert bearing
- 51: recess
- 52: opening
- 6: spring
- 7: workpiece
- 71: groove

## Claims

1. A method of putting circular toroidal springs into the outer grooves of workpieces, especially into the outer grooves of shaft seals, wherein a circular spring (6) is inserted into a flexible bearing (1) into which a transfer mandrel (2) is inserted, by which means the spring (6) is transferred onto the circumference of the transfer mandrel (2) which is ejected with the spring (6) from the flexible bearing (1) and moves above a shifting bearing (3), abutting on it, whereupon the spring (6) is transferred by a transfer sliding sleeve (23) from the circumference of the transfer mandrel (2) onto the shifting bearing (3), on which it remains even after the return of the transfer mandrel (2) to its parking position, whereupon an insert mandrel (4) moves above the shifting bearing (3) and abuts on it, whereupon with the aid of a shifting sliding sleeve (34), the spring (6) moves onto the circumference of the insert mandrel (4), which moves with the spring (6) above an insert bearing (5), in which the workpiece (7) is placed, whereby the insert mandrel abuts on the workpiece (7), whereupon with the aid of an insert sliding sleeve (44), the spring (6) moves from the circumference of the insert mandrel (4) into the outer groove of the workpiece (7) and the insertion mandrel (4) returns to its parking position.

2. A device for performing the method according to claim 1, wherein it comprises a lower set of elements and an upper set of elements for transfer of the circular spring, which are mutually displaceable in the horizontal direction and in the vertical direction to element's mutual contact, where the lower set of elements comprises a flexible bearing (1) for receiving a circular spring (6), whereby a transfer mandrel (2) of the upper set can be moved above the flexible bearing (1), the transfer mandrel (2) being coupled to means for inserting it into the flexible bearing (1) and for ejecting it from the flexible bearing (1) along with the spring (6) placed on its circumference, for transferring the spring (6) above a shifting bearing (3) of the lower set and abutting on the shifting bearing (3), whereby around the circumference of the transfer mandrel (2) is reversibly displaceably arranged a transfer sliding sleeve (23) coupled to means for returning it onto circumference of the shifting bearing (3) and back, in order to return the spring (6) onto the circumference of the shifting bearing (3), above which the transfer mandrel (2) is displaceably coupled to means for causing its reciprocating movement against the shifting bearing (3), on which is displaceably reversibly arranged a shifting sliding sleeve (34) coupled to means for returning it onto the circumference of an insert mandrel (4) and back with the purpose of transferring the spring (6) onto the circumference of the insert mandrel (4), which is along with the spring (6) displaceable above an insert bearing (5) to a position in which it abuts the workpiece (7) placed in the insert bearing (5), whereby on the circumference of the insert mandrel (4) is arranged an insert sliding sleeve (44) coupled to means for returning it above the outer groove of the workpiece (7) and back in order to transfer the spring (6) into the groove of the workpiece (7).

3. The device according to claim 2, wherein the flexible bearing (1) comprises flexible arms (11), which are provided with an inner protrusion (111) oriented to the axis of the flexible bearing (1), whereby between the protrusions (111) there is an opening having a smaller diameter than the inner diameter of the spring (6) being transferred, which is smaller than the diameter of the transfer mandrel (2).

4. The device according to claim 4 or 5, wherein the transfer mandrel (2) is tapered in the front portion (22) into the shape of a truncated cone and in the front portion of the shifting bearing (3) a recess (32) is formed, whose shape is negative to the front portion (22) of the transfer mandrel (2), the diameter of the transfer mandrel (2) and of the shifting bearing (3) being the same.

5. The device according to any of claims 2 to 4, wherein in the axis of the recess (32) of the shifting bearing (3) is formed an opening (33), whose bottom constitutes a bearing surface (35) for an abutting protrusion (43) of the insert mandrel (4).

6. The device according to any of claims 2 to 5, wherein in the interior of the flexible bearing (1) a lid (12) is reversibly displaceably mounted opposite the opening between the protrusions (111) of the arms (11), the lid (12) being coupled to a pressure spring.

## Patentansprüche

1. Verfahren zum Anziehen von Toroidalfedern in die Außennuten von Arbeitsteilen, insbesondere von Außennuten von Wellendichtungen, **wo** eine Toroidalfeder (6) in ein flexibles Bett (1) gelagert wird, in das ein Übertragungsdorn (2) hineingeschoben wird, wodurch die Feder (6) auf den Umfang des Übertragungsdornes (2) versetzt wird, der mit der Feder (6) aus dem flexiblen Bett (1) hinausgeschoben wird und über ein Überwurfbett (3) versetzt wird, auf das diese auflegt, wonach die Feder (6) durch eine Abziehhülse (23) vom Umfang des Übertragungsdornes (2) auf das Überwurfbett (3) versetzt wird, auf dem diese auch nach Rückkehr des Übertragungsdornes (2) in eine Parkposition bleibt, wonach ein Anlegedorn (4) über das Überwurfbett (3) versetzt wird und auf dieses auflegt, wonach die Feder (6) mit Hilfe einer Überwurfabziehhülse (34) auf den Umfang des Anlegedornes (4) versetzt wird, der mit der Feder (6) über das Anlegebett (5) versetzt wird, in dem ein Arbeitsteil (7) gelagert wird, wobei der Anlegedorn (4) auf den Arbeitsteil (7) auflegt, wonach die Feder (6) durch eine Anlegeabziehhülse (44) vom Umfang des Anlegedornes (4) in die Außennut des Arbeitsteiles (7) versetzt wird und der Anlegedorn (4) in seine Parkposition zurückkehrt.

2. Einrichtung zur Ausführung des Verfahrens nach dem Anspruch 1, **wo** sie ein unteres System von Elementen und ein oberes System von Elementen zum Versetzen der Toroidalfeder aufweist, die in der horizontalen Richtung und in der vertikalen Richtung in einen gegenseitigen Kontakt von Elementen gegeneinander verstellbar sind, wobei das untere System von Elementen das flexible Bett (1) zur Lagerung der Toroidalfeder (6) aufweist, wobei der Übertragungsdorn (2) des oberen Systems über das flexible Bett (1) versetzbar ist, der Übertragungsdorn (2) mit den Mitteln zum Hineinlegen ins flexible Bett (1) und zum Hinausschieben aus dem flexiblen Bett (1) zusammen mit der Feder (6) verkoppelt ist, die auf seinem Umfang zum Zwecke der Versetzung der Feder (6) über das Überwurfbett (3) des unteren Systems und zum Auflegen aufs Überwurfbett (3) gelagert ist, wobei auf dem Umfang des Übertragungsdornes (2) eine Übertragungsabziehhülse (23) umkehrbar verstellbar angeordnet ist, die mit den Mitteln zu ihrer umkehrbaren Versetzung auf den Umfang des Überwurfbettes (3) und zurück zum Zwecke der Versetzung der Feder (6) auf den Umfang des Überwurfbettes (3) verkoppelt ist, über dem der Übertragungsdorn (2) mit den Mitteln zum Hervorrufen seiner umkehrbaren Bewegung gegen das Überwurfbett (3) verstellbar verkoppelt ist, auf dem die Überwurfabziehhülse (34) umkehrbar verstellbar angeordnet ist, die mit den Mitteln zu ihrer umkehrbaren Versetzung auf den Umfang des Anlegedornes (4) und zurück zum Zwecke der Versetzung der Feder (6) auf den Umfang des Anlegedornes (4) verkoppelt ist, der mit der Feder (6) über das Anlegebett (5) in solche Lage versetzbar ist, in der dieser auf den Arbeitsteil (7) auflegt, der im Anlegebett (5) angebracht ist, wobei auf dem Umfang des Anlegebetts (4) eine Anlegeabziehhülse (44) angeordnet ist, die mit den Mitteln zu ihrer umkehrbaren Versetzung über die Außennut des Arbeitsteiles (7) und zurück zum Zwecke der Versetzung der Feder (6) in die Nut des Arbeitsteiles (7) verkoppelt ist.

3. Einrichtung nach dem Anspruch 2, **wo** das flexible Bett (1) flexible Arme (11) aufweist, die einen inneren Vorsprung (111) aufweisen, der zur Achse des flexiblen Bettes (1) orientiert ist, wobei zwischen den Vorsprüngen (111) eine Öffnung mit solchem Durchmesser vorgesehen ist, der kleiner als der Innendurchmesser der zu übertragenden Feder (6) ist, der kleiner als der Durchmesser des Übertragungsdornes (2) ist.

4. Einrichtung nach dem Anspruch 2 oder 3, **wo** sich der Übertragungsdorn (2) in dem Stirnteil (22) in die Form eines Kegelstumpfes verjüngt und in dem Stirnteil des Überwurfbettes (3) eine Ausnehmung (32) gebildet wird, deren Form zum Stirnteil (22) des Übertragungsdornes (2) negativ ist, wobei der Durchmesser des Übertragungsdornes (2) und des Überwurfbettes (3) gleich ist.

5. Einrichtung nach einem der Ansprüche 2 bis 4, **wo** in der Achse der Ausnehmung (32) des Überwurfbettes (3) eine Öffnung (33) gebildet ist, deren Boden eine Auflagefläche (35) für einen Auflagevorsprung (43) des Anlegedornes (4) bildet.

6. Einrichtung nach einem der Ansprüche 2 bis 5, **wo** in dem inneren Teil des flexiblen Bettes (1) gegen die Öffnung zwischen den Vorsprüngen (111) der Arme (11) ein Deckel (12) umkehrbar verstellbar gelagert ist, der mit einer Druckfeder verkoppelt ist.

## Revendications

1. Procédé d'introduction de ressorts circulaires toroïdaux dans les rainures extérieures de pièces à usiner, notamment dans les rainures extérieures de joints d'arbre, **caractérisé en ce que**
un ressort circulaire (6) est inséré dans un palier flexible (1) dans lequel est inséré un mandrin de transfert (2) ce qui permet le déplacement du ressort (6) sur la circonférence du mandrin de transfert (2) qui est ensuite éjecté du palier flexible (1) avec le ressort (6) et déplacé au-dessus d'un palier se serrage (3), en s'appuyant sur celui-ci, après quoi le ressort (6) est déplacé par un collier de serrage (23) de la circonférence du mandrin de transfert (2) sur le palier de serrage (3), sur lequel il reste même après le retour du mandrin de transfert (2) dans sa position de stationnement, après quoi le mandrin d'insertion (4) se déplace au-dessus du palier de serrage (3) et s'appuie sur celui-ci, après quoi, à l'aide d'un collier de serrage tournant (34) le ressort (6) se déplace sur la circonférence du mandrin d'insertion (4) qui se déplace avec le ressort (6) au-dessus d'un palier d'insertion (5) dans lequel se situe la pièce à usiner (7), tandis que le mandrin d'insertion (4) s'appuie sur la pièce à usiner (7), après quoi le ressort (6) se déplace à travers le collier de serrage d'insertion (44) de la circonférence du mandrin d'insertion (4) dans la rainure extérieure de la pièce à usiner (7) et le mandrin d'insertion (4) retourne dans sa position de stationnement.

2. Dispositif permettant la réalisation du procédé selon la revendication 1, **caractérisé en ce que**
le dispositif comprend un ensemble d'éléments inférieur et un ensemble d'éléments supérieur qui permettent le déplacement du ressort circulaire, les deux ensembles étant mutuellement déplaçables dans le sens horizontal et vertical jusqu'au contact mutuel des éléments, tandis que l'ensemble d'éléments inférieur comprend un palier flexible (1) pour recevoir le ressort circulaire (6), tandis que le mandrin de transfert (2) de l'ensemble supérieur peut être déplacé au-dessus du palier flexible (1), le mandrin de transfert (2) est attelé aux dispositifs pour l'insertion dans le palier flexible (1) et pour l'éjection du palier flexible (1) avec le ressort (6) disposé sur sa circonférence pour transférer le ressort (6) au-dessus du palier de serrage (3) de l'ensemble inférieur et pour son appui sur le palier de serrage (3), tandis que sur la circonférence du mandrin de transfert (2) est disposé, de manière déplaçable et réversible, le collier de serrage (23) attelé aux dispositifs qui permettent de le ramener sur la circonférence du palier de serrage (3) et inversement, afin de ramener le ressort (6) sur la circonférence du palier de serrage (3) au-dessus duquel le mandrin de transfert (2) est attelé de façon déplaçable à des dispositifs qui permettent de provoquer son mouvement réversible contre le palier de serrage (3), sur lequel est disposé de façon déplaçable et réversible un collier de serrage tournant (34), couplé à des dispositifs pour le ramener sur la circonférence du mandrin d'insertion (4) et en arrière, afin de transférer le ressort (6) sur la circonférence du mandrin d'insertion (4), qui est, avec le ressort (6), déplaçable au-dessus du palier d'insertion (5) vers une position dans laquelle il s'appuie sur la pièce à usiner (7) située dans le palier d'insertion (5), tandis que sur la circonférence du mandrin d'insertion (4) est disposé un collier de serrage d'insertion (44) attelé aux dispositifs pour le ramener au-dessus de la rainure extérieure de la pièce à usiner (7) et en arrière, afin de transférer le ressort (6) dans la rainure de la pièce à usiner (7).

3. Dispositif selon la revendication 2, **caractérisé en ce que** le palier flexible (1) comprend des bras flexibles (11) munis d'une saillie intérieure (111) tournée vers l'axe du palier flexible (1), tandis qu'entre les saillies (111) se situe une ouverture de diamètre inférieur au diamètre du ressort déplacé (6) qui est inférieur au diamètre du mandrin de transfert (2).

4. Dispositif selon la revendication 2 ou 3, **caractérisé en ce que** le mandrin de transfert (2) est effilé dans sa partie frontale (22) pour obtenir une forme de tronc de cône, et dans la partie frontale du palier tournant (3) est formé un évidement (32) dont la forme est négative par rapport à la partie frontale (22) du mandrin de transfert (2), tandis que le diamètre du mandrin de transfert (2) et celui du palier de serrage (3) sont égaux.

5. Dispositif selon l'une des revendications de 2 à 4, **caractérisé en ce que** dans l'axe de l'évidement (32) du palier de serrage (3) est formée une ouverture (33) dont le fond représente une surface d'appui (35) pour la saillie (43) du mandrin d'insertion (4).

6. Dispositif selon l'une des revendications de 2 à 5, **caractérisé en ce que** à l'intérieur du palier flexible (1) est disposé, de manière déplaçable et réversible face à l'ouverture entre les saillies (111) des bras (11), un couvercle (12) attelé au ressort de pression.
